# EUROPÄISCHE PATENTSCHRIFT

(11) **EP 0 697 080 B1**
(45) Veröffentlichungstag und Bekanntmachung des Hinweises auf die Patenterteilung: **12.03.1997**
(21) Anmeldenummer: 94914335.8
(22) Anmeldetag: 09.05.1994
(51) Int. Cl.: F16H 61/00

(54) **GETRIEBESTEUERSYSTEM FÜR EIN KRAFTFAHRZEUG**
GEAR CONTROL SYSTEM FOR A MOTOR VEHICLE
SYSTEME DE COMMANDE D'UNE TRANSMISSION POUR AUTOMOBILE

(30) Priorität: 12.05.1993 DE 9307228 U
(43) Veröffentlichungstag der Anmeldung: 21.02.1996
(73) Patentinhaber: SIEMENS AKTIENGESELLSCHAFT, 80333 München (DE)
(72) Erfinder: STÄRKER, Klaus, Dr., D-93073 Neutraubling (DE); KAMMERL, August, D-93164 Brunn (DE)
(86) Internationale Anmeldenummer: DE9400533
(87) Internationale Veröffentlichungsnummer: WO9427067

(56) Entgegenhaltungen:
- EP-A- 0 513 424
- US-A- 4 271 728

## Beschreibung

Die Erfindung betrifft ein Getriebesteuersystem für ein Kraftfahrzeug gemäß Oberbegriff von Patentanspruch 1.

Ein bekanntes Steuergerät für automatische Kraftfahrzeug-Getriebe (EP 0 513 424 A1) ist außerhalb des Getriebegehäuses im Kraftfahrzeug angeordnet. Von dem Steuergerät werden Signale über Leitungen an das Getriebe übermittelt. Mit den Signalen werden Steuermittel, wie Aktoren oder Stellglieder, in dem Getriebe gesteuert.

Bei einem solchen Steuersystem, das ein Steuergerät und zugeordnete Steuermittel aufweist, wird ein zusätzlicher Raum für das Steuergerät benötigt. Da das Steuergerät außerhalb des Getriebegehäuses angeordnet ist, sind recht lange Leitungen zu den Steuermitteln erforderlich.

Das gattungsgemäße Steuergerät (US 4,271,728) ist im Ölsumpf eines Getriebes angeordnet. Das Steuergerät ist über elektrische Leitungen mit dem Getriebe verbunden. Über den Aufbau der Leitungen und mögliche mechanische Beanspruchungen wird nichts gesagt.

Der Erfindung liegt das Problem zugrunde, ein Steuersystem zu schaffen, das keinen zusätzlichen Raum für ein Steuergerät benötigt und das ohne großen Aufwand vibrationssicher gehalten wird.

Das Problem wird durch die Merkmale des Anspruchs 1 gelöst. Eine Steuerelektronik zum Steuern beispielsweise eines Getriebes wird innerhalb des Getriebegehäuses angeordnet. Der in dem Getriebegehäuse vorhandene Raum wird dadurch ausgenutzt. Die elektrischen Verbindungen zwischen der Steuerelektronik und den Steuermitteln sind als starres Drahtgeflecht ausgeführt. Ein Vorteil dieser Anordnung ist es, daß die Leitungen zu den Steuermitteln sehr kurz sind und Leitungen eingespart werden. Daher ist nur eine geringe Anzahl von Steckerteilen erforderlich.

Die Steuerelektronik ist teilweise von Öl umgeben. Dies hat den Vorteil, daß das Öl zum Kühlen der Bauelemente eingesetzt werden kann. Vorteilhafte Ausgestaltungen der Erfindung sind in den Unteransprüchen gekennzeichnet. Die Steuerelektronik wird durch eine Schutzschicht vor dem Öl geschützt. Allerdings ist es vorteilhaft, wenn Kühlfahnen von Leistungsbauelementen nicht von der Schutzschicht umgeben sind, damit die von ihnen erzeugte Wärme besser an das Öl abgeführt werden kann.

Ferner können alle Bauelemente mit einem Abstand zur Leiterplatte der Steuerelektronik an dieser befestigt sein. Somit kann das Öl die Bauelemente umströmen und deren Wärme gut aufnehmen. Darüber hinaus sind das Steuergerät und die Steuermittel innerhalb des Gehäuses untereinander mit starren, elektrisch leitenden Drähten verbunden.

Ein Ausführungsbeispiel der Erfindung ist im folgenden unter Bezugnahme auf die schematische Zeichnung näher erläutert. Es zeigen:
- Figur 1:: einen Schnitt durch ein schematisch dargestelltes, erfindungsgemäßes Steuersystem und
- Figur 2:: eine perspektivische Teilansicht einer Leiterplatte mit der Steuerelektronik.

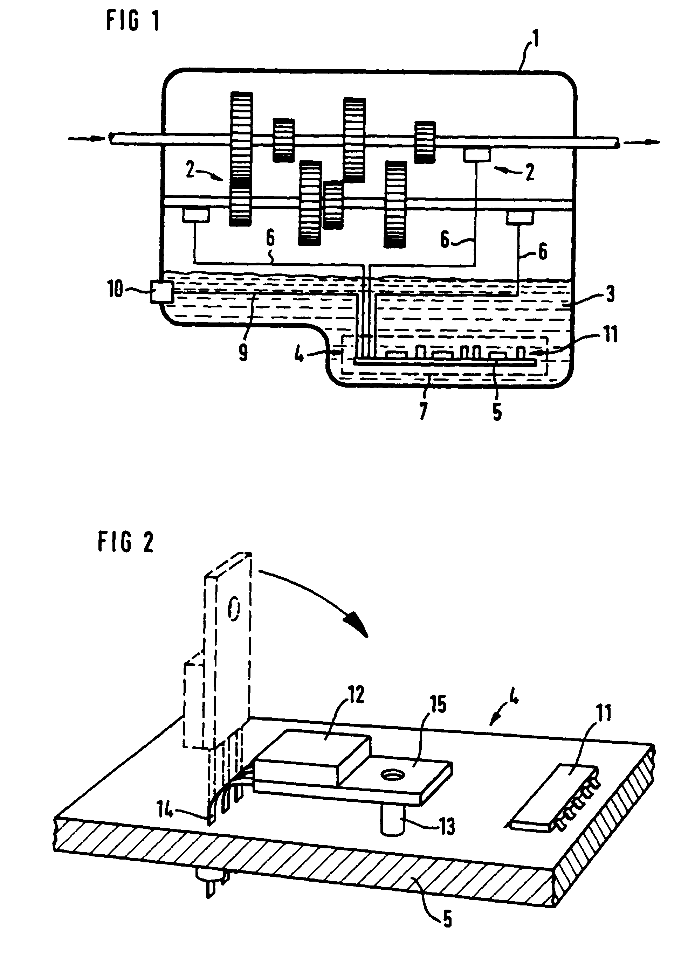

Ein erfindungsgemäßes Getriebesteuersystem weist ein Getriebegehäuse 1 (Figur 1) mit elektrischen, mechanischen und/oder hydraulischen Steuermitteln 2 und einer funktional zugeordnete Steuerelektronik auf. Die Steuermittel 2 sind das automatische Getriebe mit seinen Wellen, Zahnrädern, Kupplungen, Bremsen usw. und eine funktional zugeordnete hydraulische Steuerung mit Ölpumpe, Drosselventilen, Reglern, Sensoren und Hydraulikventilen, um die von der Steuerelektronik ermittelten Gänge des Getriebes zu schalten (in Figur 1 nur andeutungsweise stark vereinfacht gezeichnet).

Das Getriebegehäuse 1 ist teilweise mit Getriebeöl 3 gefüllt, mit dem die mechanischen Teile geschmiert oder Hydraulikventile geschaltet werden. Das Öl 3 steht in dem Getriebegehäuse 1 und wird von dort aus zu den zu schmierenden Teilen und Ventilen mit Hilfe der Ölpumpe befördert.

Das Getriebe wird von der funktional zugeordneten Steuerelektronik (nachfolgend als Steuergerät 4 bezeichnet) gesteuert. Das Steuergerät 4 weist eine elektronische Schaltung auf, die auf einer oder mehreren Leiterplatten 5 angeordnet ist. Die Schaltung ist mit den Steuermitteln 2 über starre, elektrisch leitende Leitungen 6 verbunden.

Das Steuergerät 4 ist innerhalb des Getriebegehäuses 1 angeordnet. Vorteilhafterweise befindet es sich in der Nähe der Steuermittel 2. Damit werden die elektrischen Verbindungswege zu den Steuermitteln 2 sehr kurz. Wenn das Getriebegehäuse 1 genügend Platz bietet, kann das Steuergerät 4 von einem zusätzlichen Metallgehäuse 7 (in Figur 1 gestrichelt angedeutet) umgeben sein, ansonsten ist das Steuergerät 4 quasi "nackt" in dem Getriebegehäuse 1 angeordnet, d.h. die Leiterplatten 5 mit der Steuerschaltung befinden sich frei im Gehäuseinnenraum.

Das Steuergerät 4 kann an einer Wand des Getriebegehäuses 1 angeschweißt, angeklebt, angeschraubt, angenietet, in eine Bucht eingepaßt oder in Rastelemente eingerastet sein. Es ist dabei unwesentlich, wie es befestigt ist. Wesentlich ist nur, daß es im Getriebegehäuse 1 angeordnet ist. Hierzu wird ein nichtgenutzter Teil des Innenraums des Getriebegehäuses 1 für das Steuergerät 4 ausgenutzt. Es wird also ein Raum genutzt, der ohnehin vorhanden ist. Es kann daher vorkommen, daß das Steuergerät 4 ganz oder teilweise von Getriebeöl 3 umgeben ist.

Das Steuergerät 4 weist außer den Leitungen 6 zu den Steuermitteln 2 weitere Leitungen 9 zu nicht dargestellten, elektrischen Einrichtungen außerhalb des Getriebegehäuses 1, wie z.B. zu der Batterie, zum Schalthebel oder zum Gaspedal, auf. Diese Leitungen 9 können über ein Steckerteil 10 oder unmittelbar durch die Wand des Getriebegehäuses 1 abgedichtet hindurchgeführt sein. Alle Leitungen 6 und 9 sind mit dem Steuergerät 4 verbunden. Die Leitungen 6 und 9 können auf die Leiterplatte gelötet oder geschweißt, oder auch über einen nicht dargestellten Steckverbinder mit der Leiterplatte 5 verbunden sein, wobei der Steckverbinder auf der Leiterplatte 5 befestigt ist.

Es ist günstig, die Leitungen 6 und 9 innerhalb des Getriebegehäuses 1 als starre Leitungen herzustellen. Hierzu werden elektrisch leitende Drähte so gebogen und im Getriebegehäuse 1 angeordnet, daß die Steuermittel 2 sowie das Steckerteil 10 mit der Leiterplatte 5 elektrisch verbunden sind. Die Drähte dürfen sich dabei nicht gegenseitig berühren, sie dürfen jedoch vom Getriebeöl 3 umgeben sein, da das Getriebeöl 3 elektrisch isolierend ist.

Die Leitungen 6 und 9 können zur Montage als dreidimensionales Geflecht mit nicht dargestellten, isolierenden Abstandshaltern zwischen den einzelnen Leitungen einfach in das Getriebegehäuse 1 mit den ersten Enden der Leitungen 6 und 9 auf die Leiterplatte 5 gelegt werden. Bei der Montage der Steuermittel 2 werden diese mit ihren elektrischen Anschlüssen unmittelbar auf die zweiten Enden der Leitungen 6 und 9 gelegt. Somit ist die elektrische Verbindung zwischen der Leiterplatte 5 und den Steuermitteln 2 hergestellt. Durch dieses Geflecht halten die Leitungen 6 und 9 ihre Lage auch bei vibrierender Beanspruchung, z.B. bei der Fahrt, bei.

Bevorzugt wird das Steuergerät 4 vollständig im Getriebeöl 3 angeordnet. Da Öl eine große Wärmemenge aufnehmen kann und durch Kühlung des Getriebes eine Maximaltemperatur des Öls nicht überschritten wird, ist sichergestellt, daß die Bauelemente 11 der Schaltung nicht überhitzt werden. Das Getriebeöl 3 wirkt dann wie ein Kühlkörper für wärmeerzeugende Bauelemente (nachfolgend als Leistungsbauelemente 12 bezeichnet, vgl. Fig. 2).

Damit die Wärme der Leistungsbauelemente 12 nach außen abgeführt wird, werden die Leistungsbauelemente 12 mit einem Abstand zu der Leiterplatte 5 an dieser befestigt (vgl. Figur 2). Dies kann mit Hilfe eines Abstandhalters 13 geschehen, der bei der Montage der Leistungsbauelemente 12 zwischen diese und der Leiterplatte 5 angeordnet wird. Der Abstandshalter 13 kann auch entfallen, wenn die starren Anschlußbeine 14 der Leistungsbauelemente 12 so gebogen sind, daß die Leistungsbauelemente 12 nach dem Löten einen Abstand zur Leiterplatte 5 haben. Infolgedessen kann das Getriebeöl 3 die Leistungsbauelemente 12 gut umspülen und ihre Wärme aufnehmen.

Wenn das Steuergerät 4 in dem Metallgehäuse 7 angeordnet ist, so sind die Kühlfahnen 15 der Leistungsbauelemente 12 oder die Leistungsbauelemente 12 selber an einer Seitenwand des Metallgehäuses 7 zu befestigen. Somit wird die von den Leistungsbauelementen 12 erzeugte Wärme an das Metallgehäuse 7 abgeführt. Da das Metallgehäuse 7 von Getriebeöl 3 umspült wird, wird dadurch das Steuergerät 4 gut gekühlt und die Schaltung kann wegen Überhitzung nicht ausfallen.

Damit das Getriebeöl 3 die Funktion der Bauelemente 11 der Schaltung nicht beeinträchtigt, können die Bauelemente 11 zusammen mit der Leiterplatte 5 mit einer nicht dargestellten Schutzschicht, wie beispielsweise einer Lack- oder einer Silikonschicht, versehen werden. Wenn Leistungsbauelemente 12 in der Schaltung eingesetzt werden, so ist darauf zu achten, daß die Kühlfahnen 15 der Leistungsbauelemente 12 nicht mit der Schutzschicht überzogen sind, da die Schutzschicht einen erhöhten Wärmewiderstand darstellt und dadurch die Wärme schlecht nach außen abgeführt werden kann.

Hierzu können die Leistungsbauelemente 12 stehend in die Leiterplatte 5 gelötet werden (in Figur 2 gestrichelt dargestellt). Nachdem alle Bauelemente 11 auf die Leiterplatte 5 gelötet oder auch geklebt sind, wird die Leiterplatte 5 in ein Bad, in dem sich der Stoff für die Schutzschicht, wie beispielsweise Lack oder Silikon, befindet, so weit eingetaucht, bis die Leiterplatte 5 mit ihren Bauelementen 11 vollständig mit der Schutzschicht umgeben ist, jedoch die Kühlfahnen 15 der Leistungsbauelemente 12 nicht eingetaucht sind. Die Bauelemente 11 können auch vor der Montage des Steuergeräts 4 mit einer Schutzschicht versiegelt werden und auf die Leiterplatte 5 gelötet oder geklebt werden. Anschließend können die Anschlußbeine 14 der Leistungsbauelemente 12 so gebogen werden (gemäß der Pfeilrichtung in Figur 2), daß sie einen Abstand zur Leiterplatte 5 haben. Wenn das Getriebegehäuse 1 genügend Platz bietet, können die Leistungsbauelemente 12 auch stehend auf der Leiterplatte 5 montiert sein.

## Patentansprüche

1. Getriebesteuersystem für ein Kraftfahrzeug mit einem teilweise mit Öl (3) gefüllten Gehäuse (1), in dem elektrische, mechanische und/oder hydraulische Steuermittel (2) angeordnet sind, und mit einer funktional zugeordneten Steuerelektronik (4), die innerhalb des Gehäuses (1) angeordnet sowie zumindest teilweise von Öl (3) umgeben ist und die über Leitungen (6) mit den Steuermitteln (2) elektrisch verbunden ist, **dadurch gekennzeichnet, daß** die Leitungen (6) als starre Drähte ausgebildet sind, die einerseits an elektrischen Anschlüssen der Steuerelektronik (4) sowie andererseits an den Steuermitteln (2) befestigt sind.

2. Getriebesteuersystem nach Anspruch 1, dadurch gekennzeichnet, daß eine Leiterplatte (5) über einen Steckverbinder und die Leitungen (6) mit den Steuermitteln (2) verbunden ist.

3. Getriebesteuersystem nach Anspruch 2, dadurch gekennzeichnet, daß die Leiterplatte (5) und Bauelemente (11, 12) der Steuerelektronik (4) von einer Schutzschicht umgeben sind.

4. Getriebesteuersystem nach Anspruch 3, dadurch gekennzeichnet, daß die Steuerelektronik (4) Leistungsbauelemente (12) mit Kühlfahnen (15) aufweist, wobei die Kühlfahnen (15) nicht von einer Schutzschicht umgeben sind.

5. Getriebesteuersystem nach Anspruch 4, dadurch gekennzeichnet, daß die Leistungsbauelemente (12) mit einem Abstand zu der Leiterplatte (5) an dieser befestigt sind, so daß die Leistungsbauelemente (12) von dem Öl (3) umspült werden können.

6. Getriebesteuersystem nach Anspruch 1, dadurch gekennzeichnet, daß die Steuerelektronik (4) innerhalb eines Metallgehäuses (7) angebracht ist, welches im Gehäuse (1) angeordnet ist, wobei das Metallgehäuse (7) teilweise von Öl (3) umgeben ist.

## Claims

1. Gearbox control system for a motor vehicle, with a casing (1) which is partially filled with oil (3) and in which electrical, mechanical and/or hydraulic control means (2) are arranged, and with a functionally associated electronic control system (4), which is arranged inside the casing (1) and surrounded at least partially by oil (3) and which is electrically connected to the control means (2) via lines (6), characterized in that the lines (6) are constructed as rigid wires which are attached on the one hand to electrical terminals of the electronic control system (4) and on the other hand to the control means (2).

2. Gearbox control system according to Claim 1, characterized in that a printed circuit board (5) is connected to the control means (2) via a plug connector and the lines (6).

3. Gearbox control system according to Claim 2, characterized in that the printed circuit board (5) and the components (11, 12) of the electronic control system (4) are surrounded by a protective layer.

4. Gearbox control system according to Claim 3, characterized in that the electronic control system (4) has power components (12) with cooling vanes (15), the cooling vanes (15) not being surrounded by a protective layer.

5. Gearbox control system according to Claim 4, characterized in that the components (12) are attached to the printed circuit board (5) at a distance from it so that the components (12) can be washed around by the oil (3).

6. Gearbox control system according to Claim 1, characterized in that the electronic control system (4) is fitted inside a metal casing (7) and the metal casing (7) is arranged in the casing (1), the metal casing (7) being partially surrounded by oil (3).

## Revendications

1. Système de commande de boîte de vitesses pour véhicule automobile, comportant un carter (1) partiellement rempli d'huile (3), dans lequel sont disposés des moyens de commande (2) électriques, mécaniques et/ou hydrauliques, et comportant une électronique de commande (4) qui leur est associée fonctionnellement, qui est disposée à l'intérieur du carter (1) et est entourée, au moins partiellement, par de l'huile (3), et qui est reliée électriquement aux moyens de commande (2) par des conducteurs (6),
caractérisé en ce que les conducteurs (6) sont réalisés sous la forme de fils métalliques rigides, qui sont fixés, d'un côté, à des raccords électriques de l'électronique de commande (4), et, de l'autre côté, aux moyens de commande (2).

2. Système de commande de boîte de vitesses suivant la revendication 1, caractérisé en ce qu'une plaque porte-circuit (5) est reliée aux moyens de commande (2), par l'intermédiaire d'un raccord enfichable et des conducteurs (6).

3. Système de commande de boîte de vitesses suivant la revendication 2, caractérisé en ce que la plaque porte-circuit (5) et les composants (11, 12) de l'électronique de commande (4) sont enveloppés dans une couche de protection.

4. Système de commande de boîte de vitesses suivant la revendication 3, caractérisé en ce que l'électronique de commande (4) comporte des composants de puissance (12) comportant des panneaux de refroidissement (15), ces panneaux de refroidissement (15) n'étant pas entourés par la couche de protection.

5. Système de commande de boîte de vitesses suivant la revendication 4, caractérisé en ce que les composants de puissance (12) sont fixés sur la plaque porte-circuit (5) à une certaine distance de celle-ci, de telle façon que les composants de puissance (12) peuvent être baignés par l'huile (3).

6. Système de commande de boîte de vitesses suivant la revendication 1, caractérisé en ce que l'électronique de commande (4) est placée à l'intérieur d'un carter métallique (7), qui est disposé dans le carter (1), ce carter métallique (7) étant partiellement entouré d'huile (3).
